# EUROPEAN PATENT APPLICATION

(11) **EP 4 756 607 A1**
(43) Date of publication of application: **10.06.2026**
(21) Application number: 24217637.8
(22) Date of filing: 05.12.2024
(51) Int. Cl.: G06F 8/74, G06F 8/75, G06F 8/77, G06F 21/57

(54) **SYSTEM AND METHOD FOR GENERATING SOFTWARE BILL OF MATERIALS**

(71) Applicant: PlaxidityX Ltd., 5252171 Ramat Gan (IL)
(72) Inventor: Lavi, Oron, 5252171 Ramat Gan (IL); Bari-Ephraim, Yael, 5252171 Ramat Gan (IL); Saka, Netanel, 5252171 Ramat Gan (IL); Legkov, Jonathan, 5252171 Ramat Gan (IL)
(74) Representative: Aumovio Corporation

(57) **Abstract**

A system and method for creating a software bill of materials (SBOM) includes analyzing content of input files to identify therein a set of software units; extracting parameters and/or metadata related to the software units; and providing a software bill of materials (SBOM) which includes the parameters and/or metadata.

## Description

The present invention relates generally to generating a software bill of materials (SBOM).

### BACKGROUND OF THE INVENTION

Modern automotive, aircraft, marine vessels and/or IoT systems are complex environments consisting of multiple components, systems, subsystems and composite systems in addition to multiple types of communication channels and interfaces. Software for such modern systems is typically delivered or provided as one or more computer files which typically include many software units such as libraries, applications, services, drivers as well as configuration data all of which used to operate and control these modern systems. For example, a file referred to in the art as image is generated for a specific electronic control unit (ECU) where the image includes all the libraries, applications, services, drivers as well as any configuration or other data required in for the ECU to operate. Accordingly, there is a need in the art for a system and method that will enable determining and recording the exact content of an image or other object used for delivering software packages for these systems.

### SUMMARY OF THE INVENTION

An embodiment of the invention includes a method comprising: analyzing content of input files to identify therein a set of software units; extracting parameters and/or metadata related to the software units; and providing a software bill of materials (SBOM) which includes the parameters and/or metadata. An embodiment of the invention locates, in the input file, a code segment adapted to determine parameters and/or metadata related to a software unit; modifies the code segment such that it produces output, the output including the parameters and/or metadata and executing the code segment; records at least some of the parameters and/or metadata in the SBOM; and providing the SBOM.

An embodiment of the invention identifies a mismatch between the SBOM and an expected SBOM. A type of an input file can be one or more of: Linux image, binary, AUTomotive Open System ARchitecture (AUTOSAR) binary, source files, descriptors of an AUTOSAR system, binary file of an AUTOSAR based system and XDM.

Analyzing files may include one or more of: scanning a file system, scanning for signatures, associating parts of code/content with signatures, scanning file names and code for indicators of applications and libraries, scanning an AUTOSAR Extensible Markup Language (ARXML) file and detecting identifiers associated with known AUTOSAR components and vendors, and scanning the contents of a binary code for pre-defined indicators of AUTOSAR components. The metadata may include at least one of: configuration information, version and vendor information. An embodiment of the invention may identify hardware components in a system, including hardware interfaces. An embodiment of the invention may identify network related components, data, configuration, assets and entities. An input file may include software units of an automotive system. An embodiment of the invention may identify, and extract information related to the security of a system. The code segment may be executed outside the context of the input file. A solution to the aforementioned drawbacks is achieved by the subject matter of the appended independent claims. The dependent claims disclose optional embodiments thereof. Other aspects and/or advantages of the present invention are described herein.

### BRIEF DESCRIPTION OF THE DRAWINGS

Non-limiting examples of embodiments of the disclosure are described below with reference to figures attached hereto that are listed following this paragraph. Identical features that appear in more than one figure are generally labeled with the same label in all the figures in which they appear. A label labeling an icon representing a given feature of an embodiment of the disclosure in a figure may be used to reference the given feature. The dimensions of features shown in the figures are chosen for convenience and clarity of presentation and are not necessarily shown to scale. For example, the dimensions of some of the elements may be exaggerated relative to other elements for clarity, or several physical components may be included in one functional block or element. Further, where considered appropriate, reference numerals may be repeated among the figures to indicate corresponding or analogous elements.

The subject matter regarded as the invention is particularly pointed out and distinctly claimed in the concluding portion of the specification. The invention, however, both as to organization and method of operation, together with objects, features, and advantages thereof, may best be understood by reference to the following detailed description when read with the accompanied drawings. Embodiments of the invention are illustrated by way of example and not limitation in the figures of the accompanying drawings, in which like reference numerals indicate corresponding, analogous or similar elements, and in which:
Fig. 1 shows a block diagram of a computing device according to illustrative embodiments of the present invention;
Fig. 2 shows a system and content objects according to illustrative embodiments of the present invention;
Fig. 3 shows a flowchart and content objects according to illustrative embodiments of the present invention;
Fig. 4 shows a flowchart of a method according to illustrative embodiments of the present invention; and
Fig. 5 shows a flowchart of a method according to illustrative embodiments of the present invention.

### DETAILED DESCRIPTION

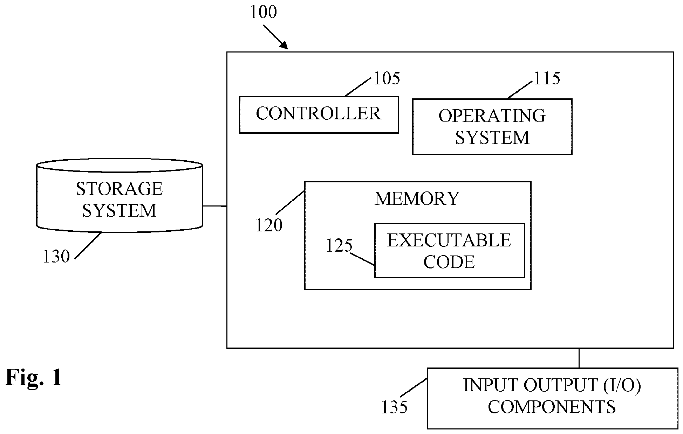

Reference is made to Fig. 1, showing a non-limiting, block diagram of a computing device or system 100 that may be used by, or included in, a system according to some embodiments of the present invention. For example, a computer used for generating an SBOM as further described herein may be or may include a computing device 100. An SBOM as referred to herein may be any object, e.g., a computer file, which includes metadata, parameters or other information describing various aspects of software units or entities.

In embodiments, computing device (or system) 100 includes a controller 105 that is a hardware controller. For example, computer hardware processor or hardware controller 105 can be, or can include a central processing unit processor (CPU), a chip or any suitable computing or computational device. In some embodiments, computing system 100 includes a memory 120, an operating system (OS) 115, executable code 125, a storage system 130, and I/O components 135 which may be detachably connected to computing device 100. In some embodiments, controller 105 (or one or more controllers or processors, possibly across multiple units or devices) is configured (e.g., by executing software or code) to carry out methods described herein, and/or to execute or act as the various modules, units, etc., for example by executing software or by using dedicated circuitry. More than one computing device 100 may be included in, and one or more computing devices 100 may be, may function, or may act as the components of a system according to some embodiments of the invention.

In some embodiments, OS 115 includes any code segment (e.g., one similar to executable code 125 described herein) designed and/or configured to perform tasks involving coordination, scheduling, arbitration, supervising, controlling or otherwise managing operation of computing device 100, for example, scheduling execution of software programs or enabling software programs or other modules or units to communicate. For example, OS 115 can be a commercial operating system, e.g., QNX or Linux.

In some embodiments, memory 120 is a hardware memory. For example, memory 120 may be, or may include machine-readable media for storing software e.g., a Random-Access Memory (RAM), a read only memory (ROM), a memory chip, a flash memory (referred to herein as flash), a volatile and/or non-volatile memory or other suitable memory units or storage units. Memory 120 may be or may include a plurality of, possibly different, memory units. In some embodiments, memory 120 is a computer or processor non-transitory readable medium, or a computer non-transitory storage medium, e.g., RAM. Some embodiments may include a non-transitory storage medium having stored thereon instructions which when executed cause the processor to carry out methods disclosed herein.

Executable code 125 can be software, an application, a program, a process, task or script. A program, process, task, application or software as referred to herein may be any type of instructions, e.g., firmware, middleware, microcode, hardware description language etc. that, when executed by one or more hardware processors or controllers 105, cause a processing system or device (e.g., system 100) to perform the various functions described herein. In some embodiments, executable code 125 is executed by controller 105 possibly under control of operating system 115. For example, executable code 125 may be an application that generates an SBOM based on an input file, e.g., based on an image of an ECU.

Storage system 130 can be, or may include any storage unit, architecture, or hardware. For example, storage system 130 can be, or can include a hard drive or disk, a universal serial bus (USB) and the like. In some cases, computing device 100 is a server and storage system 130 is a solid-state drive (SSD) or hard disk drive. For example, computing device 100 can be a remote server on the internet which can communicate with SBG 101 as further described herein.

I/O components 135 may be used for connecting (e.g., via included ports) or they may include: a mouse; a keyboard; a touch screen or pad or any suitable input device. I/O components may include one or more screens, touchscreens, displays or monitors, speakers, and/or any other suitable output devices. Any applicable I/O components may be included in, or connected to, computing device 100 as shown by I/O components 135, for example, a wired or wireless network interface card (NIC) or chip, a universal serial bus (USB) device or an external hard drive may be included in I/O components 135. Although software objects of vehicles such as cars are mainly described herein, other vehicles such as ships, trains and aircrafts are similarly applicable, it will be understood that the scope of the invention is not limited by the type, usage or nature of vehicles for which an SBOM is generated.

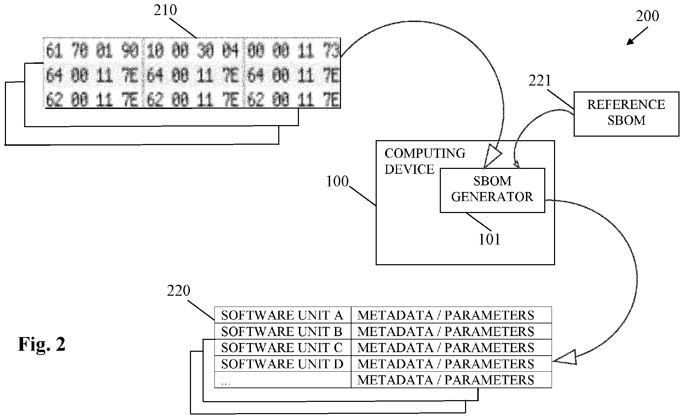

Reference is made to Fig. 2 which shows a system 200 and related content objects according to illustrative embodiments of the present invention. As shown in Fig. 2, in an embodiment, one or more input files 210 are analyzed by an SBOM Generator (SBG) software application 101 executed by computing device 100 such as a server computer. In embodiments, SBG 101 identifies in input files 210 a set of software units, extracts parameters and/or metadata related to the software units, and stores at least some of the parameters and metadata as well as additional information, in one or more SBOMs 220. For example, input files 210 and SBOM 220 can be stored in storage system 130 connected to computing device 100 as described. Once generated or updated, SBOM 220 can be provided, e.g., in the form of a computer file as known in the art, and SBOM 220 can be used as further described herein. For example and as illustrated, SBG 101 identifies, in input files 210, software units A, B, C and D and records parameters, metadata and/or any other information relevant to these software units in SBOM 220. A software unit as referred to herein may be a program, process, task, application, script, service, driver, routine or a library, e.g., as known in the art. The term library as referred to herein relates to routines in the library, e.g., execution of a library can mean execution of a specific routine, function or application in the library. Applications, services, drivers, libraries or any other executable code may be collectively referred to herein as executable software units or executable code segments.

Input files 210 and SBOMs 220 may be collectively referred to hereinafter as input files 210 and SBOMs 220, or individually as an input file 210 and an SBOM 220, merely for simplicity purposes. Reference SBOM 221 can include information which is similar to the information included in an SBO 220 as described. For example, reference SBOM 221 can be received from a manufacturer or provider of a system, e.g., a manufacturer of a car or ECU, a reference SBOM 221 can be received from a remote server. A reference SBOM 221 can be used by SBG 101 in order to validate hardware components in a system, identify missing components in a system, e.g., as described herein.

SBG 101 can extract information as described from compiled AUTOSAR systems, from Adaptive AUTOSAR systems, from binary or open-source files, e.g., by comparing symbol names or other elements therein. As further described, to generate an SBOM 220, SBG 101 identifies libraries in an input file, e.g., a binary AUTOSAR file and identifies or detects therein indicators of each library in an image, e.g., SBG 101 identifies strings, library signatures, or information similar the information returned by executing special software which identifies, extracts and provides data describing software unis, modules or applications, e.g., data such as version information of a software unit, module, application or file.

SBG 101 can be configured to process specific file formats. For example, in case input file 210 is a binary file then SBG 101 scans the binary file for signatures calculated for known or specific libraries, for example, by matching signatures of known libraries with those found in an input file 210 SBG 101 determines which specific libraries are included in the input file 210.

If the input file 210 is source file, then SBG 101 scans the file names and code for indicators of the libraries being used. If the input file 210 includes descriptors of an AUTOSAR system, in a known AUTOSAR Extensible Markup Language (ARXML) format, then SBG 101 scans the ARXML and detects identifiers associated with known AUTOSAR components and vendors. If the input file 210 is a binary file of an AUTOSAR based system, then SBG 101 scans the contents of the binary code for pre-defined indicators of AUTOSAR components.

In an embodiment, SBG 101 locates, in an input file 210, a special code segment adapted to determine or identify parameters and/or metadata related to a software unit. SBG 101 further modifies the located code segment such that it produces output which can be captured and stored, and such that the output includes parameters and/or metadata which the code segment is adapted to determine or identify. Next, SBG 101 executes the modified code segment and stores the resulting output in an SBOM 220. SBG 101 can repeat the above process for any number of software units included in input files 210, for example, metadata for software units A, B, C and D in SBOM 220 can be a result identifying, and repeating the above sequence or process for, each of software units A, B, C and D. For example, a first special code segment can be located, modified and executed such that metadata of software unit A is obtained, a second, different special code segment can be located, modified and executed such that metadata of software unit B is obtained and so on.

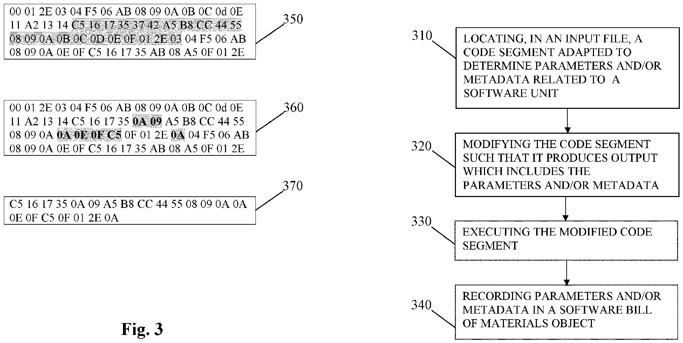

Reference is made to Fig. 3 which shows a flowchart and content objects according to illustrative embodiments of the present invention. As shown by block 310, a flow or process includes locating, in the input file, a special or specific code segment adapted to determine parameters and/or metadata related to a software unit. For example, such code segment is found, identified and located by SBG 101 by analyzing an input file 210 and identifying therein a specific signature, mark, specific sequence of bytes and so on. For example, the shaded portion in object 350 (e.g., an excerpt from an input file 210) starting with the sequence of "C5 16 17" and ending with the sequence of "01 2E 03" can be identified, e.g., by SBG 101, as code segment which is adapted to determine parameters and/or metadata for, of, or related to, a software unit.

As shown by block 320, a method or flow includes modifying the located code segment such that it produces output which includes the determined parameters and/or metadata. For example and as illustrated by the content of object 350 and modified object 360, the sequence of "37 42" in object 350 is replaced, e.g., by SBG 101, by "0A 09" in object 360, the sequence of "0B 0C 0d 0E" in object 350 is replaced by "0A 0E 0F C5" in object 360 and "03" in object 350 is replaced by "0A" in object 360. As shown by block 330, a method or flow includes executing the modified code segment. For example, the modified code segment shown by block 370 is executed (or caused to execute) such that it produces information of, for, or related to, a software unit. As shown by block 340, a flow can further include recording at least some of the parameters and/or metadata produced by executing the modified code segment in an SBOM 220, and providing the SBOM 220, e.g., in the form of a digital data file stored in storage 130. In embodiments, in order to execute the modified code, e.g., SBG 101 modifies memory regions, CPU registers etc. or applies other changes which are required in order for the code shown by block 350 to be properly executed and such that it produces output as described.

In an embodiment, SBG 101 executes the special or specific code segment outside the context of the input file. To find the special or specific code segment in case the input file or image is a binary (compiled) object, SBG 101 decompiles the input object to produce a decompiled object and then searches the decompiled object for instances of special or specific code segments in decompiled libraries or other parts of the decompiled object. An image of an ECU can include a plurality of modules, e.g., a cryptography module, a networking module, a time management module and so on. In embodiments, SBG 101 searches an input object for names or other identifiers of modules and then extracts information or metadata as described for each of the identified modules and further updates an SBOM according to the extracted or obtained information. Similarly, SBG 101 identifies a plurality of software libraries in an input object and obtains, for the libraries, information which it then includes in an SBOM as described.

For example, after special or specific code segment adapted to determine parameters and/or metadata related to a software unit is located, e.g., as shown in block 350 in Fig. 3, SBG 101 extracts and places the special or specific code segment and/or metadata info in certain parameters, or on the stack of a function call, or in a certain memory address and SBG 101 then reads metadata from the memory, parameters or stack. In some embodiments, the SBG 101 wraps the special or specific code segment such that when executed, the output is directed to a file or memory location set by SBG 101, for example, the output is set to be an SBOM 220 as described. For example, SBG 101 sets the output to be the standard output (stdout) of a system which can be a specific file, which can then be read by SBG 101 when creating an SBOM 220 as described.

An embodiment of the invention can identify a mismatch between an SBOM generated as described and an SBOM or other information provided by a producer, manufacturer or seller of a system. For example, a manufacturer or provider of an ECU may provide a reference SBOM 221 describing software installed in the provided ECU, an embodiment can compare such provided reference SBOM 221 with an SBOM 220 generated as described and identify mismatches between the two SBOM's. For example, a provider of an ECU may indicate, advertise or list, e.g., in a reference SBOM 221, a specific set of software applications or services installed in a provided ECU, where the advertised specific set does not include nor list all software applications actually installed in the ECU. This can be the case, for example, since the advertised list is targeting a specific market or need, or since the advertised list is part of a larger bundle of software units or packages or simply due to mistakenly including software components that are not required.

A mismatch can be a missing application or service, e.g., an application or service listed, described or included in an SBOM received from a provider of an ECU or system but not found in an image of the ECU or other file used as input files 210. A mismatch can be a redundant application or service, e.g., an application or service which is not listed nor described nor included in an SBOM received from a provider of an ECU or system but found in an image of the ECU or other file used as input files 210. A mismatch can be a wrong or unexpected version or instance of an application, e.g., a version which is different from the version indicated in a reference SBOM 221. Both such mismatches between an SBOM provided by a seller, manufacturer or provider of an ECU or other system can be identified by an embodiment by comparing an SBOM 220 generated as described with an SBOM received from a seller, manufacturer or provider.

In embodiments, SBG 101 can be designed and/or configured to identify software units in files that can be of various formats or created according to various standards, e.g., ones used by the automotive industry. SBG 101 can identify software units in input files 210 that can be of any applicable type or format and may be created according to any specification or standard. For example, an input file 210 can be a Linux image file, a binary file, a source code file or any files created according to an automotive architecture, standard or protocol, e.g., files created according to AUTOSAR. An input file 210 can include descriptors of an AUTOSAR system or it can be a binary file of an AUTOSAR based system, e.g., an Extensible Markup Language (XDM) file or an AUTOSAR XML (ARXML).

In embodiments, analyzing input file 210, e.g., by SBG 101 as described, can include scanning a file system, e.g., scanning a Linux file system from a root ("/") directory down to specific directories such as /bin, /dev, /lib and so on. Analyzing an input file 210 can include searching for signatures and associating parts of code or content with signatures. Analyzing an input file 210 can include searching for file names, text found in the code, comments describing a file or code etc. For example, some code or data portions in an image of an ECU can be signed such that any modification of these code or data segments can be readily identified by matching a freshly calculated signature with a reference cryptographic signature or hash value. Analyzing an input file 210 can include searching or scanning file names and code for names or other indicators of, or references to applications and libraries, for example, file names, text found in code, comments describing a file or code can all be analyzed by SBG 101 in order to identify and determine software unis, modules or libraries in an input file. Analyzing an input file 210 can include scanning an ARXML file and detecting identifiers associated with known AUTOSAR components and vendors, and scanning the contents of a binary code for pre-defined indicators of AUTOSAR components.

In embodiments, metadata in an SBOM 220 includes at least one of: configuration information, version and vendor information. For example, configuration information can include settings and parameters that are used or applied during system boot-up and/or are in effect during run-time. For example, configuration information included in an SBOM 220 can include permissions or privileges of users and applications, priorities, thresholds, encryption keys, operation modes, network configuration data etc. In embodiments, metadata in an SBOM 220 includes security related information, e.g., encryption methods or algorithms used for encrypting data, usernames, passwords and the like. In embodiments, metadata in an SBOM 220 includes indications of compilation or activation of certain security mechanisms. For example, an SBOM 220 can include an indication that an address space layout randomization (ASLR) method and/or mechanism was used or activated when an image of an ECU was compiled, linked or otherwise created.

Version can include versions of software applications, services, drivers or any other software units. Version can include versions of hardware units or components, e.g., a version of a central processing unit (CPU), version of a memory module or other electronic chips. Versions of hardware units or components in an SBOM 220 can include information related to any hardware component in a vehicle, e.g., a water pump or gear assembly. Vendor information in an SBOM 220 can include any information the vendor chooses to include therein, e.g., model name, manufacturing date and the like. For example, a specific processor or other hardware in a specific version of an ECU might have some vulnerabilities which may be relevant, e.g., in suggesting security insights.

In embodiments, SBG 101 identifies hardware components in a system. For example, based on configuration files which are specific for network interfaces, SBG 101 determines which specific hardware network interfaces are included in a system, e.g., ports, switches, wireless components and bridges. In other cases, SBG 101 determines and identifies hardware components based on discovering or identifying software drivers which are specific for specific hardware components. Information related to hardware components identified in an input file and stored in an SBOM 220 can include any information related to a vehicle, e.g., make, model, year, unique ID and the like.

It will be understood that any assets or entities of a system, either software ones or hardware ones, can be identified by SBG 101 by processing and analyzing input files 210 as described. Information related to hardware components, software components, entities or assets discovered and/or identified as described, e.g., by SBG 100 can further be provided, e.g., by storing data in an SBOM 220 as described. Specifically, SBG 101 can be configured to search for, and identify software units of an automotive systems, e.g., cryptographic software units, CAN communication drivers or other software units as included and shipped in vehicles, e.g., software units generated according to the AUTOSAR standard.

In embodiments, SBG 101 identifies in, and extracts from, an input file 210, information related to security of a system. For example, familiarity with a file system identified in an input file 210 enables SBG 101 to identify in, and extract from an input file 210 information such as usernames, passwords, network addresses, cryptographic data and the like.

In some embodiments, a dynamic SBOM (DSBOM) is dynamically created, e.g., while a system boots up or is up and running. A DSBOM created as described can add a layer of real-time insight by actively monitoring invocations, execution or calls to, executable software units or executable code segments, e.g., third-party libraries as known in the art.

A DSBOM generated as described can accurately identify and track usage of libraries within an application. Information in a DSBOM created by dynamic or real-time monitoring of a system, while the system is operational, can enable precise understanding of an application or software's ecosystem. For example, knowing exactly which (and when) software applications, library routines or other executable code segments are executed when a system is running, e.g., as it would when deployed, enables identifying and accurately assessing vulnerabilities as well as taking or suggesting measures to better protect the system.

A DSBOM can be created, updated or refreshed when a system is already operational or deployed. For example, SBG 101 can be installed in ECUs in cars sold in the market and such deployed SBG 101 units can, periodically, upon receiving a command or in response to an event, generate, regenerate or update a DSBOM as described.

In embodiments, a dynamic SBOM (DSBOM) is generated dynamically, by recording execution of software units. For example, a system (e.g., an ECU or an assembly of connected ECUs) is allowed to run, operate or function as it normally would, e.g., as it operates when installed in a vehicle. While the system is running, operating or functioning, an embodiment of the invention records information related to execution of applications, code segments in libraries, services and the like. Specifically, an embodiment records, in a DSBOM, in real time and/or run time, which applications, services, software drivers, routines and libraries are executed in or by a system. Accordingly, a DSBOM is an SBOM which is dynamically created.

Generally, content in a DSBOM is similar to content in an SBOM 220 as described with the exception that a DSBOM is dynamically generated in real time while a system is operational and running. For example, a system which includes, or is, an ECU or an interconnected set of ECUs or other systems, is powered up and allowed to run. While running, various inputs can be provided to the system thus simulating varying conditions or real working environments. While the system is running as described, an embodiment monitors invocations of applications, code segments in libraries, services or any other executable code segments and records information related to the invoked executable code segments. In addition to monitoring (and recording in a DSBOM) which executable code segments are invoked or executed as described, an embodiment may further track and record execution sequence, or order in time of a system. Execution order or sequence can be used, e.g., to determine an attacker has modified a system such that specific code segments are maliciously excluded from a boot sequence and are not executed upon boot or are not executed according to the manufacturer's intended order or sequence.

For example, SBG 101 can determine and record, e.g., during a learning phase or upon receiving a command, that the invocation or execution time order of the software units shown in SBOM 220 is: "software unit C" then, three milliseconds later, "software unit D" and so on. Such time order can be stored (e.g., as a reference SBOM 221) and used, e.g., for future verification that a boot sequence of an ECU has not been tampered with. In another example, a manufacturer or provider of a system can indicate (e.g., as a reference SBOM 221) that the order of execution of the software units (e.g., in or during a boot sequence) in the above example is "software unit A", "software unit B", "software unit C", then "software unit D", accordingly, discovering (and recording in a DSBOM) an execution order which starts with "software unit C" can be identified, e.g., by SGB 101 or another entity, which compares data in a DSBOM with a reference SBOM 221, as an indication that the system has been tampered with. In yet another case, an execution order of "software unit A", "software unit C", then "software unit D" can be identified or indicating that execution of "software unit B" has been disabled, e.g., by a malicious entity. In yet another case, if the time interval between execution of software units does not match the interval recorded in an SBOM, an embodiment may record the event and alert a user.

SBG 101 can periodically, upon detecting an event or per a command, create a reference DSBOM. For example, a DSBOM can be created during a learning phase or mode. To generate a reference DSBOM SGB 101 can include breakpoints in an image of an ECU as described with reference to Fig. 3, and load the modified image upon boot, or SGB 101 can load a preinstalled modified image from a flash memory. In another example, SBG 101 periodically generates a new DSBOM and compares it with a reference DSBOM. Accordingly, SGB 101 can periodically monitor, check or verify the set of applications or other software units or modules which are executed by a system. For example, if a reference DSBOM indicates that "software unit D" is called or executed three milliseconds after "software unit C" but a freshly generated DSBOM shows that "software unit D" is called or executed fifty milliseconds after "software unit C" then SBG 101 records such mismatch and alerts a user. Such timing mismatch can, for example, indicate that a malicious entity has modified a system, e.g., executes some malicious software between execution of "software unit C" and "software unit D". Accordingly, by recording timing aspects of execution of software units and checking such timing aspects a system can identify malicious activity or presence in the system.

In another case, SBG 101 can detect unexpected execution hierarchy, or parent-child relations between software units. For example, a reference DSBOM indicates that "software unit C" is executed or called by "software unit A", however, SBG 101 identifies that "software unit C" is called by "software unit B". In such and other cases where SGB 101 identifies a mismatch between a reference DSBOM or a reference SBOM 221 and a DSBOM created as described, SGB 101 can perform one or more actions, e.g., alert a user, record the mismatch event and related information or interact with ECUs 260 or other components in an in-vehicle network and cause connected components to perform actions.

In another aspect, using a DSBOM and a reference DSBOM as described, SBG 101 can verify that a specific number of instances of the same application are executed. For example, a reference DSBOM indicates that two instances of "software unit C" and one instance of "software unit D" are executed during normal, verified operation of an ECU. However, a newly created DSBOM indicates that only one instance of "software unit C" is executed and two instances of "software unit D" are executed. For example, a hacker may have disabled one of the executions of "software unit C" in one of the areas in an image and has further added execution of an instance of "software unit D". By comparing a DSBOM with a reference DSBOM, such intervention or tampering with a system can be identified by SBG 101.

In some embodiments, a DSBOM is generated periodically, or even every time a system is powered up and the DSBOM is then checked against a reference SBOM 221, if a mismatch is found, an embodiment can take several actions, e.g., raise or send an alert or otherwise inform a user or system, record the mismatch and relevant data, shutdown a system etc.

In embodiments, a method for generating a DSBOM includes replacing, e.g., in assembly code in a memory, a call to a software unit by a breakpoint, recording execution of the software unit upon reaching the breakpoint, and removing the breakpoint such that a subsequent execution of the software unit is not recorded or acted upon.

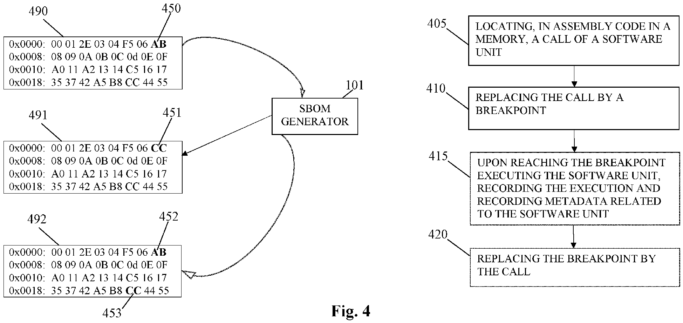

Reference is made to Fig. 4, which shows a flowchart and content objects according to illustrative embodiments of the present invention. As shown by block 405, a method includes locating, in assembly code in a memory, a call of a software unit. A call to or of a software unit as used herein means invocation or execution of the software unit. For example, to generate a DSBOM, after content is loaded to a RAM, e.g., an image including assembly code of an ECU is loaded into the RAM 120 of the ECU, SBG 101 searches the loaded image for specific data patterns or specific sequences of values. For example, remaining with the image of an ECU example, SBG 101 searches the (now in RAM) image for patterns, sequences or values that locate and/or identify, in the image, libraries, applications, drivers and services. For example, in a portion of an image loaded into RAM as shown by block 490, the value "AB" 450 is identified, by SBG 101, as a call to a software unit. For the sake of simplicity and clarity, values such as "AB" 450 and "CC" 451 are shown, however, it will be understood that different patterns may relevant, e.g., patterns shown in blocks 350 and 360 in Fig. 3 may be found or located by SBG 101.

As shown by block 410, a method includes replacing a call by a breakpoint. For example, as shown by "CC" 451 in memory image 491, SBG 101 replaces the call "AB" 450 with a breakpoint "CC" 451. As shown by block 415, the method includes, upon reaching the breakpoint during execution, recording the execution and recording metadata related to the software unit and then executing the software unit. Generally, a breakpoint enables switching control of execution from an application or other executable code (typically running or executed in user space or user mode) to a designated code, e.g., code that runs or is executed in kernel space or mode, and which is further adapted to record information related to the interrupted application or other executable code. For example, a breakpoint "CC" 451 inserted as shown and described, causes execution to switch from user space to kernel space and execute, in kernel mode, a specific code, e.g., a specific code adapted to identify, extract or obtain as well as provide, information related to an executable code segment. For example, the "CC" 451 breakpoint causes execution of code that identifies, extracts or obtains, and provides, information related to the application which is called by the "AB" 450 call.

As shown by block 420, the method includes replacing the breakpoint by the original call. After recording execution and parameters of an executable code segment (e.g., an application or service) embodiments of the invention remove the breakpoint inserted as described such that a subsequent call to, or execution of, the executable code segment is not recorded nor burdens execution. For example, as shown by "AB" 452 in memory image 492, after recording execution of the intended software unit, SBG 101 replaces the breakpoint "CC" 451 back to the "AB" 450 call. Any number of calls of or to dynamic libraries, functions, applications or other executable code can be replaced by a breakpoint, e.g., as shown by additional breakpoint 453 such that calls to any number (or all) of dynamic libraries, library routines, functions, applications or other executable code are recorded as described.

Simply described, an embodiment replaces a call to an application, dynamic or other library routine, service or any other executable code in an image of an ECU, a set of such images or any other relevant software object with a breakpoint. Once the breakpoint is reached during run time, rather than executing the specific application, library routine or service, code associated with the breakpoint is executed where the associated code is adapted to record that execution of the specific application, library routine or service has occurred as well as recording metadata related to the specific application, library routine or service, e.g., version information and the like. Next, the breakpoint is removed, and the original call is restored.

It is noted that while tools such as strace or ltrace record every call to, or execution of external libraries, e.g., printf, these tools do so repeatedly, every time the external library is called, thus considerably impacting performance. In contrast, a DSBOM created as described registers each call of a library or other executable code only once and subsequent calls of the same library are unaffected thus embodiments of the invention enable recording which software units are executed while optimizing speed and efficiency. Additionally, tools such as ltrace only identify direct calls from an application but cannot identify inner functions or transitive calls from other libraries. In contrast, a DSBOM generated as described can identify the critical path within the code. For instance, a DSBOM generated as described can include calls originating from third-party libraries.

Test coverage or coverage level as known and referred to in the art generally indicates, or relates to, the part, portion or percentage of code of a system which was actually tested. Accordingly, test coverage level is crucial, e.g., in order to determine whether testing a system should be continued or terminated and/or determining whether or not a system has been fully or thoroughly tested.

An embodiment of the invention automatically calculates a coverage level by comparing data in a DSBOM with data in static SBOM. For example, a set of executable software units or executable code segments recorded in a DSBOM as described is compared with the set of executable software units or executable code segments in an SBOM. As described, an SBOM may include all of the executable software units or executable code segments in the system, e.g., as provided by a manufacturer or provider of the system, accordingly, by comparing the set in a DSBOM which reflects the set which was actually executed with the set in an SBOM an embodiment can determine, record and inform a test coverage level of the system. Moreover, an embodiment can determine, record and inform which of the executable software units in the system were tested and which were not tested. For example, a test procedure can be automatically stopped when test coverage reaches a specific test coverage level, e.g., 85%.

An embodiment can remove, or flag for removal, executable software units which are not executed. For example, having reached a threshold test coverage level, the embodiment compares the set of executable software units in a DSBOM to that in an SBOM, e.g., a reference SBOM 221, and identifies and records or lists one or more executable software units which appear in the reference SBOM 221 but do not appear in the DSBOM. Such unused executable software units may be redundant, that is, although they are included in a system (e.g., in an image of an ECU) they are never used. Redundant executable software units may be removed from the system, e.g., automatically by SBG 101 or by a user who may use the list of redundant executable software units in order to remove them from an image of an ECU or from files or a system. As would readily be recognized by a person having ordinary skill in the art, identifying and removing unused executable software units, e.g., libraries, from a system based on DSBOM can enhance system security by reducing attack surfaces.

In another case, by relating or comparing data in a DSBOM to data in a reference SBOM 221 can be used for determining test coverage of a system. For example, a test coverage can be calculated based on comparing the number, type or other aspects of applications, libraries and other software units included in a DSBOM, to those included in a reference SBOM 221.

In other embodiments, an unused executable software unit is added to a list of suspicious entities. For example, an unused (or never executed executable software unit is suspected as one that was maliciously added to a system and is thus suspected and flagged so that a user can decide whether or not to remove it from the system. For example, when a vehicle is serviced, a DSBOM can be created as described, compared to a reference SBOM 221 and viruses or other executable software unit which were maliciously added can be thus identified and dealt with.

An embodiment automatically prioritizes a set of vulnerabilities of software units in a system according to whether or not the software units are executed and according to risk severities associated with software units. For example, an SBOM of a system indicates the system includes a library element, e.g., libperl 5.36.0 which is associated with a common vulnerability enumeration (CVE) metric of CVE-2023-31484, however a DSBOM generated for the system as described does not show the libperl 5.36.0 library is ever executed but further shows that a different library, e.g., libcurl 7.86.0, which is associated with a CVE metric of CVE-2023-27534 is executed or called. Since the risk severity of indicated by CVE-2023-27534 is higher than the one indicated by CVE-2023-31484, an embodiment can reprioritize vulnerabilities of a system or can alert a user, informing the user that priorities of vulnerabilities of a system should be checked such that vulnerabilities are addressed or handled correctly, according to their respective risk levels or severities.

SBG 101 can identify or determine that a software unit expected to be included in a system, per or according to an SBOM from a manufacturer or provider of a system, is missing, e.g., the software unit is never executed or called. In such case, SBG 101 may record the missing software unit, alert a user or suggest adding the software unit. SBG 101 can identify, locate or find all executable software units in a system. For example, an image as known and referred to in the art can be a file which includes all software units of an ECU. Typically, an image can be stored in a flash memory (e.g., as shown by 130 in Fig 1) and can be loaded into a RAM 120 of the ECU. SBG 101 can search for executable software units in an image, either when stored in flash memory 130 or loaded into a RAM 120 of an ECU and replace calls to all executable software units in the image as described. Accordingly, SBG 101 can determine whether or not a specific executable software has ever been called or executed as described and can therefore, by comparing a DSBOM with an SBOM, identify missing executable software units.

SBG 101 can automatically suggest a software unit to be used. For example, having generated a DSBOM as described, SGB 101 can identify that both libcurl 7.86.0 and libcurl 7.86.1 are included and executed in a system, accordingly, SBG 101 can inform a user that libcurl 7.86.1 should replace libcurl 7.86.0. In another case, SBG 101 can identify that two versions of a specific executable software exist in a system, e.g., in two different libraries, and SBG 101 can inform a user of such duplicity and/or suggest using the newest or latest version in place of the older one.

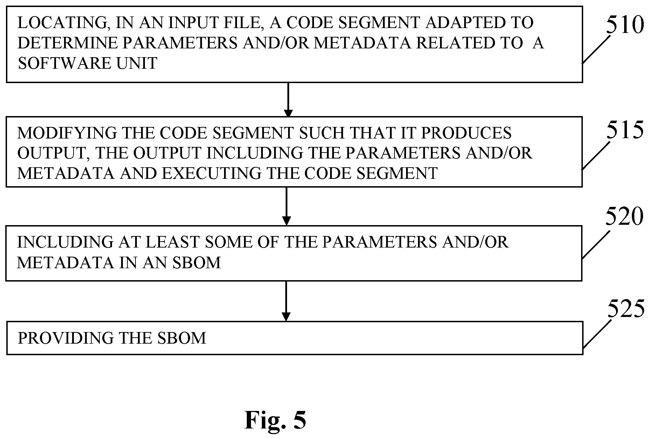

Reference is made to Fig. 5, which shows a flowchart of a method according to illustrative embodiments of the present invention. As shown by block 510, a method according to some embodiments of the invention may include locating, in an input file, a code segment adapted to determine parameters and/or metadata related to a software unit. For example, SBG 101 scans an image of an ECU and identifies a specific code as described.

As shown by block 515, a method can further include modifying the code segment such that it produces output, the output including the parameters and/or metadata and executing the code segment. For example, SGB 101 wraps the special code segment such that it produces output to a file or to specific address in a memory and executes the wrapped special code segment.

As shown by block 520, a method can further include including at least some of the parameters and/or metadata in an SBOM, e.g., SBG 101 generates an SBOM as described. As shown by block 525, a method can further include providing the SBOM, e.g., SBG 101 provides SBOM 220 as a file.

In the detailed description, numerous specific details are set forth in order to provide a thorough understanding of the invention. However, it will be understood by those skilled in the art that the present invention may be practiced without these specific details. In other instances, well-known methods, procedures, and components, modules, units and/or circuits have not been described in detail so as not to obscure the invention. Some features or elements described with respect to one embodiment may be combined with features or elements described with respect to other embodiments. For the sake of clarity, discussion of same or similar features or elements may not be repeated.

Although embodiments of the invention are not limited in this regard, discussions utilizing terms such as, for example, "processing," "computing," "calculating," "determining," "establishing", "analyzing", "checking", or the like, may refer to operation(s) and/or process(es) of a computer, a computing platform, a computing system, or other electronic computing device, that manipulates and/or transforms data represented as physical (e.g., electronic) quantities within the computer's registers and/or memories into other data similarly represented as physical quantities within the computer's registers and/or memories or other information non-transitory storage medium that may store instructions to perform operations and/or processes. Although embodiments of the invention are not limited in this regard, the terms "plurality" and "a plurality" as used herein may include, for example, "multiple" or "two or more". The terms "plurality" or "a plurality" may be used throughout the specification to describe two or more components, devices, elements, units, parameters, or the like. The term set when used herein may include one or more items.

Unless explicitly stated, the method embodiments described herein are not constrained to a particular order in time or to a chronological sequence. Additionally, some of the described method elements can occur, or be performed, simultaneously, at the same point in time, or concurrently. Some of the described method elements may be skipped, or they may be repeated, during a sequence of operations of a method.

In the description and claims of the present application, each of the verbs, "comprise" "include" and "have", and conjugates thereof, are used to indicate that the object or objects of the verb are not necessarily a complete listing of components, elements or parts of the subject or subjects of the verb. Unless otherwise stated, adjectives such as "substantially" and "about" modifying a condition or relationship characteristic of a feature or features of an embodiment of the disclosure, are understood to mean that the condition or characteristic is defined to within tolerances that are acceptable for operation of an embodiment as described. In addition, the word "or" is considered to be the inclusive "or" rather than the exclusive or, and indicates at least one of, or any combination of items it conjoins.

Descriptions of embodiments of the invention in the present application are provided by way of example and are not intended to limit the scope of the invention. The described embodiments comprise different features, not all of which are required in all embodiments. Some embodiments utilize only some of the features or possible combinations of the features. Variations of embodiments of the invention that are described, and embodiments comprising different combinations of features noted in the described embodiments, will occur to a person having ordinary skill in the art. The scope of the invention is limited only by the claims.

While certain features of the invention have been illustrated and described herein, many modifications, substitutions, changes, and equivalents may occur to those skilled in the art. It is, therefore, to be understood that the appended claims are intended to cover all such modifications and changes as fall within the true spirit of the invention.

Various embodiments have been presented. Each of these embodiments may of course include features from other embodiments presented, and embodiments not specifically described may include various features described herein.

## Claims

1. A method comprising:
analyzing content of input files to identify therein a set of software units;
extracting parameters and/or metadata related to the software units; and
providing a software bill of materials (SBOM) which includes the parameters and/or metadata.

2. The method of claim 1, comprising:
locating, in the input file, a code segment adapted to determine parameters and/or metadata related to a software unit;
modifying the code segment such that it produces output, the output including the parameters and/or metadata and executing the code segment;
recording at least some of the parameters and/or metadata in the SBOM; and
providing the SBOM.

3. The method of claim 1 or 2, comprising identifying a mismatch between the SBOM and an expected SBOM.

4. The method of any one of the preceding claims wherein the types of the input files are one or more of: Linux image, binary, AUTOSAR binary, source files, descriptors of an AUTOSAR system, binary file of an AUTOSAR based system and XDM.

5. The method of any one of the preceding claims wherein analyzing the input files includes one or more of:
scanning a file system,
scanning for signatures,
associating parts of code/content with signatures,
scanning file names and code for indicators of applications and libraries,
scanning an AUTOSAR Extensible Markup Language (ARXML) file and detecting identifiers associated with known AUTOSAR components and vendors, and
scanning the contents of a binary code for pre-defined indicators of AUTOSAR components.

6. The method of any one of the preceding claims wherein the metadata includes at least one of: configuration information, version and vendor information.

7. The method of any one of the preceding claims comprising identifying hardware components in a system (e.g., Interfaces, network)

8. The method of any one of the preceding claims comprising identifying network related components, data, configuration, assets and entities.

9. The method of any one of the preceding claims wherein the input files include software units of an automotive system.

10. The method of any one of the preceding claims comprising identifying and extracting information related to security of a system.

11. The method of any one of claims 2-10 wherein executing the code segment is done outside the context of the input file.

12. A system comprising a data processing circuit configured to execute a method according to any one of the claims 1 to 11.

13. A computer program comprising instructions which, when the program is executed by a computer, cause the computer to carry out a method of any one of the claims 1 to 11.
